# EUROPEAN PATENT APPLICATION

(11) **EP 2 159 807 A1**
(43) Date of publication of application: **03.03.2010**
(21) Application number: 08290812.0
(22) Date of filing: 29.08.2008
(51) Int. Cl.: H01G 4/28, H01G 5/16

(54) **A capacitor and a method thereof**

(71) Applicant: Alcatel Lucent, 75008 Paris (FR)
(72) Inventor: Bøhme, Christian, 3400 Hillerød (DK); Nygaard, Hass, 3500 voerlose (DK)
(74) Representative: Richardt, Markus Albert

(57) **Abstract**

The invention relates to a capacitor comprising: an outer tubular conductor having a first and a second end portion; a ring slot in the outer tubular conductor extending to the first end portion and having a ring diameter; an inner tubular conductor having a third and forth end portion; a tubular slot in the inner tubular conductor extending to the forth end portion, the tubular slot having an approximate diameter of the ring diameter. The inner tubular conductor is partially inside the ring slot of the outer tubular conductor and have a separation distance between the forth portion of the inner tubular conductor and a bottom of the ring slot. The outer tubular conductor and the inner tubular conductor form a capacitance.

## Description

### Technical field

The invention relates to a tubular capacitor and to a method of producing a tubular capacitor.

### Background and related art

A capacitor is an electrical device that stores energy in the electrical field between a pair of conductors or plates. A capacitor consists of two of these plates or conductive electrodes separated by a dielectric, that prevents charge from moving directly between the plates. A simple capacitor consists of two wide, flat and parallel plates separated by a thin dielectric layer. A property called the capacitance measures the charge stored on each plate for a given voltage. In general, capacitance is greater in devices with large plate areas, separated by small distances. When a dielectric is present between two charge plates, its molecules become polarized and reduce the internal electrical field and therefore the voltage.

### Summary of the Invention

The invention relates to a capacitor comprising: an outer tubular conductor having a first and a second end portion; a ring slot in the outer tubular conductor extending to the first end portion and having a ring diameter; an inner tubular conductor having a third and forth end portion; a tubular slot in the inner tubular conductor extending to the forth end portion, the tubular slot having an approximate diameter of the ring diameter. The inner tubular conductor is partially inside the ring slot of the outer tubular conductor and have a separation distance between the forth portion of the inner tubular conductor and a bottom of the ring slot. The outer tubular conductor and the inner tubular conductor form a capacitance and correspond to the conductive electrodes or plates of the capacitor.

One of the advantage of the embodiments is that the structural design of the conductive electrodes of the capacitor allow reaching electrical field lines and capacitance levels with a fraction of the size of traditional conductors or plates, as electrical field is formed on at least two different sections of the capacitor. The electrical field is formed between the outer tubular conductor and the inner tubular conductor and from an internal section of the outer tubular conductor and the inner tubular conductor. The embodiments also reduces the size and the length of the conductors, as well as the weight of the capacitor. Further, as the conductors are shorter, the losses are also reduced.

In an embodiment of the invention, the capacitor further comprises: a second ring slot in the outer tubular conductor extending to the first end portion and having a second ring diameter, wherein the second ring diameter is smaller than the first ring diameter; and an second inner tubular conductor in the first tubular slot having an approximate inner ring diameter of the second ring slot; wherein the second inner tubular conductor is partially inside the second ring slot; wherein the second inner tubular conductor is coupled to the inner tubular conductor.

In further embodiments, the capacitor is adapted for filtering out direct current, low frequencies and allowing transmission of alternating currents at high frequencies.

In further embodiments, the separation distance between the inner tubular conductor and the ring slot is adjusted for modifying the capacitance.

In further embodiments, the second inner tubular conductor and the inner tubular conductor form a single conductor.

In further embodiments, the ring slot is filled with a dielectric, or a non-conductive material, or air.

In further embodiments, the separation distance between the inner tubular conductor and the ring slot reaches a predetermined value for obtaining electric field lines between the outer tubular conductor and the inner tubular conductor.

In another aspect, the invention relates to a method of producing a capacitor comprising the steps of: providing an outer tubular conductor having a first and a second end portion; forming a ring slot in the outer tubular conductor extending to the first end portion and having a ring diameter; providing an inner tubular conductor having a third and forth end portion; forming a tubular slot in the inner tubular conductor extending to the forth end portion, the tubular slot having an approximate diameter of the ring diameter; and placing the inner tubular conductor inside the ring slot of the outer tubular conductor with a separation distance between the forth portion of the inner tubular conductor and a bottom of the ring slot.

In further embodiments, the method of producing a capacitor further comprises: forming a second ring slot in the outer tubular conductor extending to the first end portion and having a second ring diameter, wherein the second ring diameter is smaller than the first ring diameter; forming an second inner tubular conductor in the first tubular slot having an approximate inner ring diameter of the second ring slot; and placing the second inner tubular conductor inside the second ring slot; wherein the second inner tubular conductor is coupled to the inner tubular conductor.

In further embodiments, the separation distance between the inner tubular conductor and the ring slot is adjusted for modifying the capacitance. In further embodiments, the second inner tubular conductor and the inner tubular conductor form a single conductor.

In further embodiments, the separation distance between the inner tubular conductor and the ring slot reaches a predetermined value for obtaining a direction of electric field lines between the outer tubular conductor and the inner tubular conductor.

### Brief description of the drawings

In the following preferred embodiments of the invention will be described in greater detail by way of example only making reference to the drawings in which:
- Figure 1: is a schematic of an external view of the capacitor,
- Figure 2: is a schematic of a longitudinal cut of the capacitor,
- Figure 3: is a schematic of an embodiment of a longitudinal cut of the capacitor,
- Figure 4: is a representation of an embodiment of a transversal cut of the capacitor.

### Detailed description

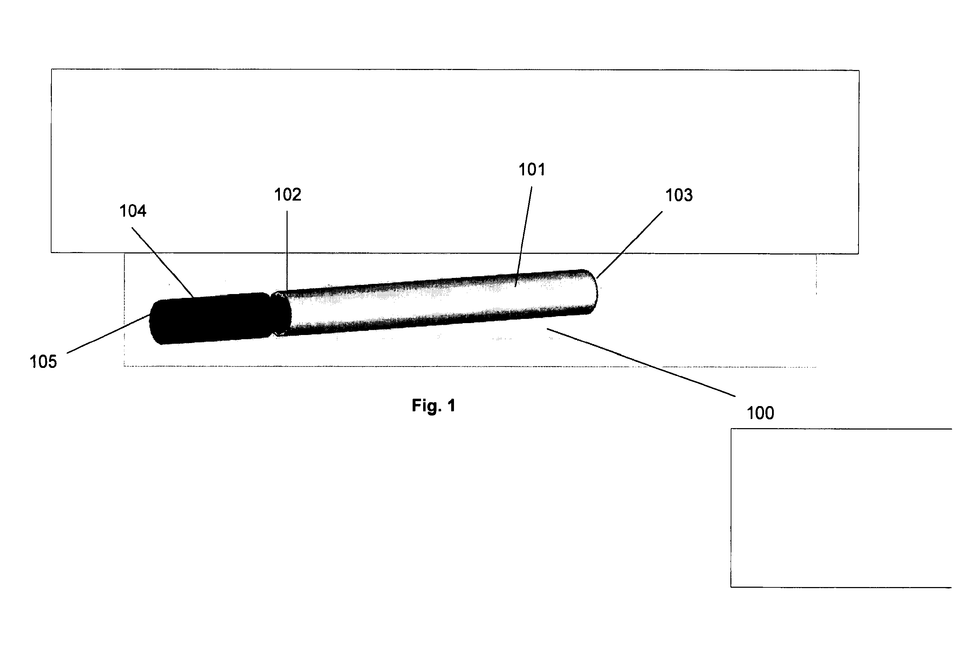

Fig. 1 shows a 3-D view of the capacitor 100 that comprises an outer tubular conductor 101 having a first end portion 102 and a second end portion 103. The capacitor 100 further comprises an inner tubular conductor 104 having a third end portion 105 and a fourth end portion not represented in the figure 1.

The outer tubular conductor 101 further comprises a ring slot that extends to the first end portion 102 of the outer tubular conductor and that has a ring diameter. The inner tubular conductor 104 is partially inside the ring slot of the outer tubular conductor 101 and has a separation distance between the fourth portion of the inner tubular conductor 104 and a bottom of the ring slot. The outer tubular conductor 101 and the inner tubular conductor 104 are adapted to form a capacitance.

The capacitor is adapted for filtering out direct current and low frequencies, and letting in the transmission of alternating currents. The separation distance between the inner tubular conductor and the ring slot may be adjusted for modifying the capacitance values. The second inner tubular conductor and the inner tubular conductor may form a single conductor. The ring slot 201 may be partially or completely filled with a dielectric, a non-conductive material or air. Further, the separation distance between the inner tubular conductor and the ring slot may reach a predetermined value for obtaining electrical field lines between the outer tubular conductor 101 and the inner tubular conductor 104. The outer tubular conductor 101 and the inner tubular conductor 104 are conductive electrodes or plates of the capacitor.

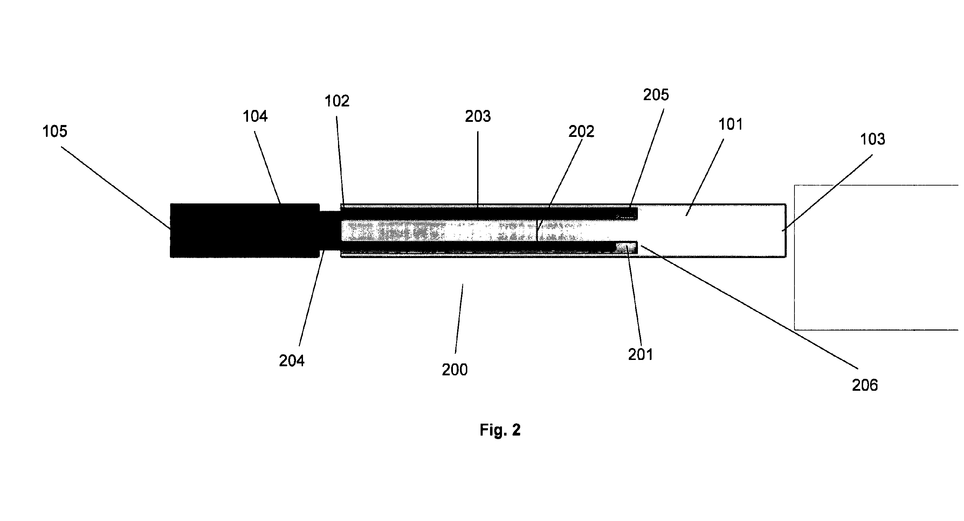

Fig. 2 shows a longitudinal cut of the capacitor 200. An outer tubular conductor 101 includes a first end portion 102 and a second end portion 103. A ring slot 201 in the outer tubular conductor 101 extends to the first end portion 102 and has a ring diameter 202. An inner tubular conductor 104 has a third end portion 105 and a sixth end portion 203. A tubular slot 204 in the inner tubular conductor 104 extends to the fourth end portion 203 and has an approximate diameter of the ring diameter 202.

The inner tubular conductor 104 is partially inside the ring slot 201 of the outer tubular conductor 101. The inner tubular conductor and the outer tubular conductor has a separation distance 205 between the fourth end portion 203 and a bottom 206 of the ring slot 201. The outer tubular conductor 101 and the inner tubular conductor 104 are adapted to form a capacitance.

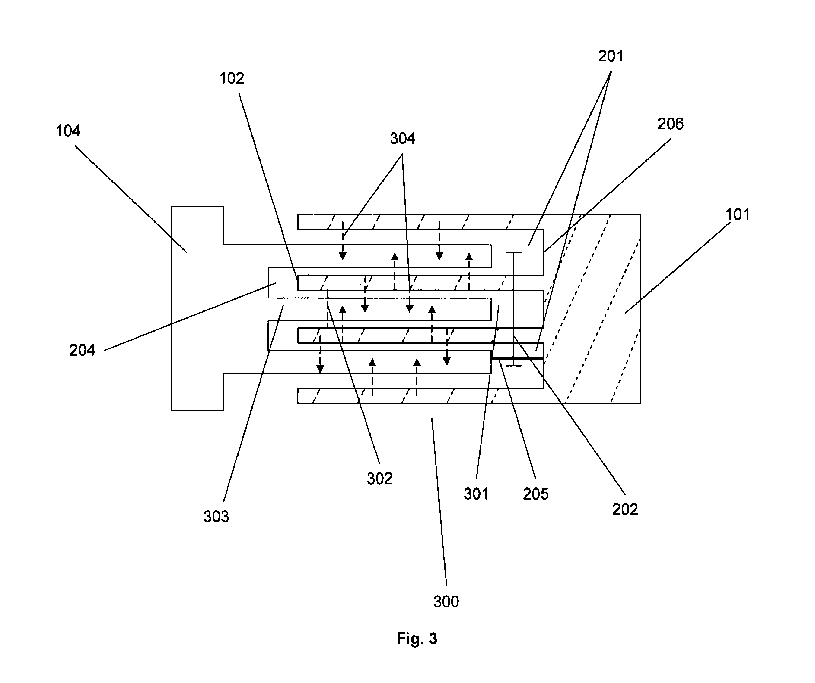

Fig. 3 shows a longitudinal cut of an embodiment of the capacitor 300. The capacitor 300 comprises an outer tubular conductor 101. The outer tubular conductor 101 comprises a ring slot 201 having a ring diameter 202. An inner tubular conductor 104 includes a tubular slot 204. The tubular slot has an approximate diameter of the ring diameter 202.

The capacitor 300 further comprises a second ring slot 301 in the outer tubular conductor 101 extending to the first end portion 102 and comprising a second ring diameter 302. The second ring diameter 302 is smaller than the first ring diameter 202. A second inner tubular conductor 303 is in the tubular slot 204 and has an approximate inner ring diameter of the second ring diameter 302. The second inner tubular conductor 303 is partially inside the second ring slot 301. The second inner tubular conductor 303 is coupled to the inner tubular conductor 104.

The capacitor 300 shows examples of the different field lines 304 created between the different plates formed between the outer tubular conductors and the second inner tubular conductors. The capacitor 300 comprises four different sections where the field lines can be formed between the outer tubular conductor and the first and second inner tubular conductors. The total amount of field lines, and therefore the capacitance values can be modified by changing the separation distance 205 between the fourth end portion 203 and a bottom 206 of the ring slot 201.

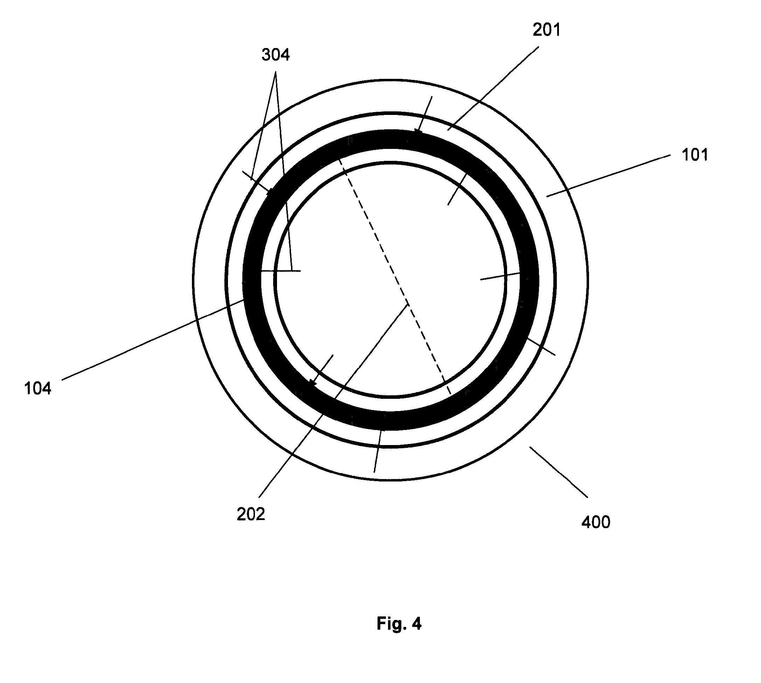

Fig. 4 shows a transversal cut of the capacitor 400. The capacitor 400 comprises an outer tubular conductor 101, a ring slot 201 in the outer tubular conductor 101 and having a ring diameter 202. The capacitor 400 further comprises an inner tubular conductor 104 having a tubular slot with an approximate diameter of the ring diameter 202. The tubular slot in the inner tubular conductor 104 allows introducing the inner tubular conductor 104 inside the ring slot 201 of the outer tubular conductor 101.

The capacitor is adapted for filtering out direct current and low frequencies, and allowing the transmission of alternating currents. The separation distance between the inner tubular conductor and the ring slot may be adjusted for modifying the capacitance values. The second inner tubular conductor and the inner tubular conductor may form a single conductor. The ring slot 201 may be partially or completely filled with a dielectric, a non-conductive material or air. The capacitor 400 shows examples of the different field lines 304 created between the different plates formed between the outer tubular conductors and the second inner tubular conductor

The separation distance between the inner tubular conductor and the ring slot may reach a predetermined value for obtaining electrical field lines between the outer tubular conductor 101 and the inner tubular conductor 104. The outer tubular conductor 101 and the inner tubular conductor 104 are conductive electrodes or plates of the capacitor.

The design of any of the embodiments presented allow reducing and compacting the length of the tubular conductors and maintaining the same electrical performance for a fraction of the distance of the tubular conductors, as the number of electrical field lines is doubled thanks to the capacitance created between the at least two different fields formed between the outer conductor and the inner conductor. The capacitor allows blocking direct current while permitting transmission of alternating currents and may also be used for radio frequency applications and general filtering uses. The design of the embodiments of the invention reduces the size and the length of the conductors, as well as the weight of the capacitor. As the conductors are shorter, the losses are also reduced.

### List of Reference Numerals

| | |
|---|---|
| 100 | Capacitor |
| 101 | Outer tubular conductor |
| 102 | First end portion |
| 103 | Second end portion |
| 104 | Inner tubular conductor |
| 105 | Third end portion |
| 200 | Capacitor |
| 201 | Ring slot |
| 202 | Ring diameter |
| 203 | Fourth end portion |
| 204 | Tubular slot |
| 205 | Separation distance |
| 206 | Bottom of the ring slot |
| 300 | Capacitor |
| 301 | Second ring slot |
| 302 | Second ring diameter |
| 303 | Second inner tubular conductor |
| 304 | Electrical field lines |
| 400 | Transversal cut of the conductor |

## Claims

1. A capacitor comprising:
- an outer tubular conductor (101) having a first (102) and a second end portion (103);
- a ring slot (201) in said outer tubular conductor (101) extending to said first end portion and having a ring diameter (202);
- an inner tubular conductor (104) having a third (105) and forth end portion (203);
- a tubular slot (204) in said inner tubular conductor (104) extending to said forth end portion (203), said tubular slot (204) having an approximate diameter of said ring diameter;
wherein said inner tubular conductor (104) is partially inside said ring slot (201) of said outer tubular conductor (101) and has a separation distance (205) between said forth portion (203) of said inner tubular conductor (104) and a bottom (206) of said ring slot (201); wherein said outer tubular conductor (101) and said inner tubular conductor (104) form a capacitance.

2. The capacitor of claim 1 further comprises:
- a second ring slot (301) in said outer tubular conductor (101) extending to said first (102) end portion and having a second ring diameter (302),
wherein said second ring diameter (302) is smaller than said ring diameter (202);
- an second inner tubular conductor (303) in said tubular slot (204) having an approximate inner ring diameter of said second ring slot (301);
wherein said second inner tubular conductor (303) is partially inside said second ring slot (301); wherein said second inner tubular conductor (303) is coupled to said inner tubular conductor (104).

3. The capacitor of claim 1 and claim 2, wherein said capacitor is adapted for filtering out direct current, low frequencies and allowing transmission of alternating currents.

4. The capacitor of any of the preceding claims, wherein said separation distance between said inner tubular conductor and said ring slot is adjusted for modifying said capacitance.

5. The capacitor of any of the preceding claims, wherein said second inner tubular conductor and said inner tubular conductor form a single conductor.

6. The capacitor of any of the preceding claims, wherein said ring slot is filled with a dielectric, or a non-conductive material, or air.

7. The capacitor of any of the preceding claims, wherein said separation distance between said inner tubular conductor and said ring slot reaches a predetermined value for obtaining electric field lines between said outer tubular conductor and said inner tubular conductor.

8. The capacitor of any of the preceding claims, wherein said outer tubular conductor and said inner tubular conductor are conductive electrodes or plates of said capacitor.

9. A method of producing a capacitor comprising the steps of:
- providing an outer tubular conductor having a first and a second end portion;
- forming a ring slot in said outer tubular conductor extending to said first end portion and having a ring diameter;
- providing an inner tubular conductor having a third and forth end portion;
- forming a tubular slot in said inner tubular conductor extending to said forth end portion, said tubular slot having an approximate diameter of said ring diameter;
- placing said inner tubular conductor inside said ring slot of said outer tubular conductor with a separation distance between said forth portion of said inner tubular conductor and a bottom of said ring slot.

10. The method of producing a capacitor of claim 9 further comprising:
- forming a second ring slot in said outer tubular conductor extending to said first end portion and having a second ring diameter, wherein said second ring diameter is smaller than said first ring diameter;
- forming an second inner tubular conductor in said first tubular slot having an approximate inner ring diameter of said second ring slot;
- placing said second inner tubular conductor inside said second ring slot;
wherein said second inner tubular conductor is coupled to said inner tubular conductor.

11. The method of producing a capacitor of claim 9 or 10, wherein said separation distance between said inner tubular conductor and said ring slot is adjusted for modifying said capacitance.

12. The method of producing a capacitor of any of the claims 9 to 11, wherein said second inner tubular conductor and said inner tubular conductor form a single conductor.

13. The method of producing a capacitor of any of the claims 9 to 12, wherein said separation distance between said inner tubular conductor and said ring slot reaches a predetermined value for obtaining a direction of electric field lines between said outer tubular conductor and said inner tubular conductor.
